# EUROPÄISCHE PATENTSCHRIFT

(11) **EP 1 046 947 B1**
(45) Veröffentlichungstag und Bekanntmachung des Hinweises auf die Patenterteilung: **06.11.2002**
(21) Anmeldenummer: 99108122.5
(22) Anmeldetag: 24.04.1999
(51) Int. Cl.: G03B 15/05, F21V 7/00

(54) **Reflektoreinrichtung für Blitzgeräte, Fotoleuchten und Videoleuchten zum Erzeugen direkten und indirekten Lichts**
Reflector device for flashlights, photographic and video lighting devices for producing direct and bouce lighting
Réflecteur pour flash et éclairage pour la photo et la video permettant un éclairage directe et indirecte

(43) Veröffentlichungstag der Anmeldung: 25.10.2000
(73) Patentinhaber: Frey, Sabine, 01445 Radebeul (DE)
(72) Erfinder: Frey, Sabine, 01445 Radebeul (DE)
(74) Vertreter: Weissfloh, Ingo

(56) Entgegenhaltungen:
- DE-A- 19 838 221
- DE-C- 19 636 817
- US-A- 4 272 169
- US-A- 5 717 964
- US-A- 5 778 264

## Beschreibung

Die Erfindung betrifft eine Reflektoreinrichtung zur Lichtteilung für Blitzgeräte, Fotoleuchten und Videoleuchten, insbesondere für Elektronenblitzgeräte deren Lichtaustrittsfläche nach oben schwenkbar ist, welche außerhalb des Blitzgeräte-, Fotoleuchten- bzw. Videoleuchtengehäuses angeordnet ist.

Es sind eine Vielzahl von Elektronenblitzgeräten bekannt. Der meist angewandte direkte Blitz hat hartes, kaltfarbenes Licht. Dadurch wirken porträtierte Gesichter unnatürlich hell und flach, nahe Hintergründe werden angestrahlt, es entstehen Schlagschatten und die entfernten Hintergründe verschwinden im Dunkel.

Der indirekte, zur Decke gerichtete Blitz schafft zwar natürlicher wirkendes, weiches Licht, das Motiv und nähere Hintergründe werden von oben her ausgeleuchtet, vor allem z.B. Gesichter wirken plastischer und es entstehen kaum Schlagschatten. Allerdings geht auch viel Licht verloren und die Aufnahmen werden häufig unterbelichtet. Die Augenpartien der porträtierten Personen sind durch das von oben her kommende Licht oft beschattet. Auch sonst zeigen beim indirekten Blitzlicht alle Schatten nach unten und lassen das Gesicht auf dem Foto müde aussehen. Ist der Blitz im 60°-Winkel nach oben vorn gerichtet, ist der Lichtverlust geringer als wenn im 90°-Winkel nach oben geblitzt wird. Dabei werden aber die nach unten weisenden Schatten im Gesicht des Porträtierten noch ausgeprägter, da das Licht dann direkt von oben kommt.

Eine Reihe von Lösungen, die diese Nachteile vermeiden, sind bekannt So ist in der DE 30 33 532 A1 eine Vorsatzvorrichtung für ein Blitzgerät beschrieben, bei der eine Reflexionsvorrichtung im Strahlengang schräg verlaufend angeordnet ist. Diese Reflexionsvorrichtung reflektiert einen Teil des Lichtes nach oben, so daß sowohl eine direkte als auch eine indirekte Ausleuchtung des zu fotografierenden Objektes erfolgt. Mit jedem Reflektieren des Lichtes geht eine gewisse Lichtmenge verloren. Z. B. bei hochglänzendem Aluminium sind es etwa 15 %, die nicht nach oben reflektiert werden, die weiße Zimmerdecke absorbiert zusätzlich noch 20 %. Das Licht, das den Raum ausleuchtet, wird also doppelt reflektiert und dabei abgeschwächt. Das Licht, das die Person frontal beleuchtet, ist hingegen direkt.

Eine aufwendige Blitzgerätekonstruktion ist aus der DE 31 13 620 A1 bekannt. Dabei sind ein Innen- und ein Außenreflektor um eine Blitzlichtquelle schwenkbar und um eine gemeinsame Achse angeordnet, wobei diese beiden Reflektoren wie eine Lichtteilung wirken. Auch hierbei ist das frontale Licht, ein direktes hartes Blitzlicht und eignet sich bekanntermaßen für Porträtaufnahmen nur sehr schlecht. Eine andere Lösung ist in der DE 32 48 200 A1 erläutert. Hierbei ist ein Blitzgerät mit zwei Blitzeinheiten ausgestattet, wobei die nach vom gerichtete Blitzeinheit durch eingebaute Reflektoren oder Diffusoren weiches, indirektes Licht erzeugt und eine zweite zum indirekten Ausleuchten des Motivs über die Raumdecke dient In der US-Schrift D 312 471wird ein Reflexionsschirm gezeigt, bei dem das direkte Licht in indirektes umgewandelt wird. Ähnlich konstruierte Reflexionsschirme oder auch Softboxen, die zur weichen Ausleuchtung der zu fotografierenden Objekte dienen, sind aus Prospekten z.B. der Firma Lastolite bekannt. Sie sind mit etwas Aufwand an jedem handelsüblichen Blitzgerät mit nach oben schwenkbarer Lichtaustrittsfläche anbringbar. Allerdings wird das zu fotografierende Motiv nur von vorn ausgeleuchtet und der Hintergrund verschwindet im Dunkeln wie beim direkten Blitzlicht.

Die aufwendig konstruierten Blitzgeräte sind relativ teuer und nur für spezielle Einsatzbereiche geeignet. Eine breitere Verwendung finden die Reflexionsschirme bzw. Softboxen. Beide besitzen jedoch den Nachteil, daß sie unhandlich sind und sich relativ aufwendig an den verschiedenen Elektronenblitzgeräten befestigen lassen. Zudem führt die Verwendung von Reflexionsschirmen und Softboxen in Ihnenräumen oft zu schlecht ausgeleuchteten Aufnahmen.

Aus Prospekten ist eine Reflexionseinrichtung unter der Bezeichnung Lumiquest Promax 80+20 bekannt, wobei 80 % des Blitzlichtes zur Raumdecke durch Aussparungen durchgelassen werden und den Hintergrund und das Motiv von oben her ausleuchten. 20 % des Blitzlichtes werden durch Stege zwischen den Aussparungen für die frontale Ausleuchtung nach vorn umgelenkt. Die Befestigung an Blitzgeräten, deren Lichtaustrittsflächen nach oben schwenkbar sind, ist wie bei Softboxen relativ aufwendig. Des weiteren eignet sich diese Reflexionseinrichtung nicht für Hochformataufnahmen. Alle zur Zeit bekannten Reflexionseinrichtungen, Reflexionsschirme bzw. Softboxen sind für die Fotoreportage, wo es auf schnelle Einsatzbereitschaft ankommt nur bedingt geeignet.

Aus der US 5 778 264 A ist eine Reflexionseinrichtung zum Umlenken des aus einem Elektronenblitzgerät kommenden Lichtflusses, bekannt, die im wesentlichen aus einer reflektieren, faltbaren Scheibe mit Mitteln zum Befestigen in einem bestimmten Winkel gegenüber der Lichtaustrittsfläche von Blitzgeräten besteht. Der Erfindung liegt die Aufgabe zu Grunde, eine Reflektoreinrichtung zur Lichtteilung für Blitzgeräte, Fotoleuchten und Videoleuchten, insbesondere für Elektronenblitzgeräte, deren Lichtaustrittsfläche nach oben schwenkbar ist, welche außerhalb des Blitzgeräte-, Fotoleuchten- bzw. Videoleuchtengehäuses angeordnet ist, zu schaffen, die kleiner, leichter und besser handhabbar ist als die bisherigen Lösungen und zusätzlich ein qualitativ und quantitativ hochwertiges Licht erzeugt.
Die Aufgabe wird erfindungsgemäß durch die Merkmale des ersten Patentanspruches gelöst. Die erfindungsgemäße Reflektoreinrichtung, als Lamellenreflektor bezeichnet, ist kleiner, leichter und paßt durch ihre nahezu flächige Form in jede Jackentasche. Außerdem läßt sich der Lamellenreflektor mit einem Handgriff an jeder Beleuchtungseinrichtung, deren Lichtaustrittsfläche nach oben schwenkbar ist (das sind z.B. 75 % aller auf dem Markt befindlicher Blitzgeräte), auch bei unterschiedlicher Bauweise sehr schnell befestigen. Ein weiterer Vorteil ist die Eignung auch für Aufnahmen im Hochformat ohne Qualitätseinbußen. Zum Beispiel während des Blitzens strahlt fast der gesamte Lichtkegel am Lamellenreflektor vorbei an die Raumdecke und leuchtet von dort den Hintergrund und das Motiv von oben her aus. Der erfindungsgemäße Lamellenreflektor lenkt nur den nach hinten abgestrahlten Teil des Blitzlichtes, der sonst für die Aufnahme verloren ginge, für die frontale Ausleuchtung nach vorn um. Dabei wird während des Blitzens das Motiv zusätzlich mit weichen, diffusen Licht ausgeleuchtet.

Der erfindungsgemäße Lamellenreflektor soll nachstehend in einem Ausführungsbeispiel an Hand der Figuren lund 2 näher erläutert werden.

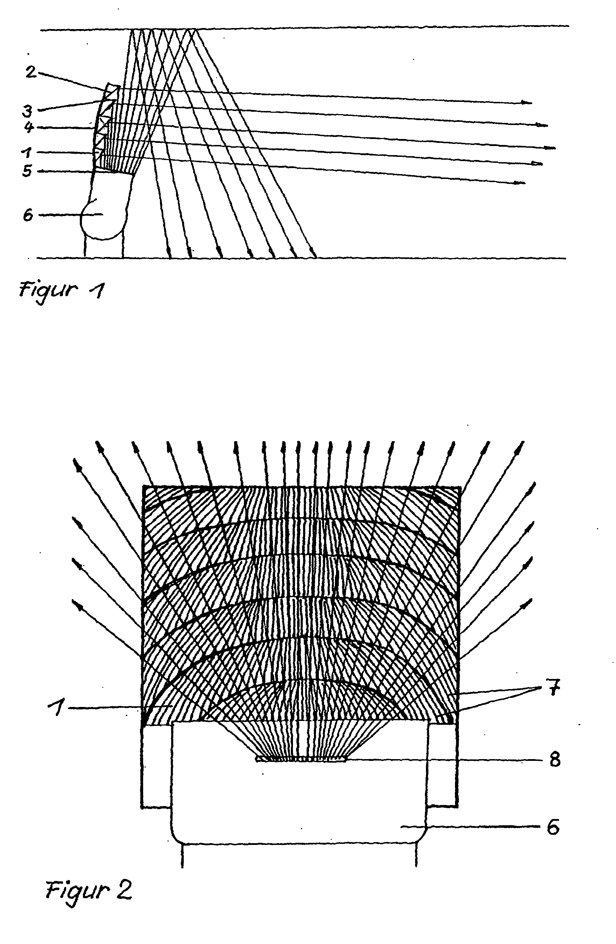

Fig. 1 zeigt stark vereinfacht die Anordnung des erfindungsgemäßen Lamellreflektors an einem stilisierten Blitzgerät 6, dessen Lichtaustrittsfläche 5 nach oben schwenkbar ist und den Strahlengang von der Lichtaustrittsfläche 5 aus, zum einen zur Raumdecke (indirekte Ausleuchtung) und über die Lamellen 1 des Lamellenreflektors (frontale Ausleuchtung) zum zu fotografierenden Motiv. Dabei ist der Lamellenreflektor im rechten Winkel bezogen auf die Lichtaustrittsfläche 5 am Blitzgerät 6 z.B. befestigt.

Fig. 2 zeigt die Vorderansicht eines Lamellenreflektors mit den vorzugsweise angeordneten Rillen 7 und die Strahlenverläufe des Blitzlichtes von der Blitzröhre 8 aus gesehen.

Aus Fig. 1 sind die parallel angeordneten und mit einer reflektierenden Schicht versehenen, sägezahnartigen, schräg nach unten gerichteten Lamellen 1 ersichtlich, wobei die Lamellenvorderseiten 2 eine das Licht streuende Oberflächenstruktur besitzen. Durch diese Oberflächenstruktur ist das nach vorn abgestrahlte Licht diffuser als das von dem Blitzgerät 6 ankommende harte Blitzlicht.

Die Reflexionsfläche des erfindungsgemäßen Lamellenreflektors hat vorzugsweise eine quadratische Außenkontur und ist hohlspiegelartig gekrümmt. Die sägezahnartigen Lamellen 1 sind in einem Winkel von 45 Grad, bezogen auf die Scheibenkrümmung der Reflektorrückwand 4 angeordnet. Durch die Lamellen 1 entstehen auf dem Lamellenreflektor eine Vielzahl von Reflexionsebenen, wobei deren Gesamtfläche größer ist, als die Grundfläche, die sich aus den Abmessungen des zur Reflexion dienenden Teiles des Lamellenreflektors ergibt. Ca. vier Fünftel jeder Lamelle 1 werden zur Reflexion genutzt, der Rest ist beschattet. Auch zwischen Lamellenvorderseite 2 und Lamellenrückseite 3 der benachbarter Lamellen 1 treten Reflexionen auf. Deshalb sind die nach oben weisenden Lamellenrückseiten 3 stark reflektierend ausgebildet.

Aus Fig. 2 ist die Anordnung der Lamellen 1 in den Eckbereichen der Reflektoreinrichtung nach unten zur Lichtaustrittsfläche 5 hin konzentrisch gekrümmt ersichtlich. Von der Blitzröhre 8 aus laufen die Strahlen des Blitzlichtes kegelförmig auseinander. Die nach unten gerichtete Krümmung der Lamellen 1 ist so ausgebildet, daß die Lamellen 1 zu den Lichtstrahlen stets nahezu in rechtem Winkel verlaufen.

Die hohlspiegelartige Krümmung des Reflexionsteils des erfindungsgemäßen Lamellenreflektors ermöglicht den beschatteten Teil der Lamellen 1 so klein wie möglich zu machen. Des weiteren ist die Außenabmessung breiter als die Lichtaustrittsfläche 5 des Blitzgerätes 6, so daß eine möglichst gleichmäßige und maximale Reflexion auch des seitlich abgestrahlten Blitzlichtes entsteht.

Die reflektierenden Vorderseiten der erfindungsgemäßen Lamellen 1 sind mit einer speziellen feinkörnigen Oberflächenstruktur versehen, die die Eigenschaft hat, das auftreffende Licht zu streuen, so daß ein gleichmäßig gestreutes, ausreichend diffuses Licht abgestrahlt wird. Analoge Oberflächenstrukturen können knitterartig ausgebildet sein. Da trotzdem ein leicht mittenbetondes Aufhellicht entstehen kann, sind in einer weiteren vorteilhaften Ausführungsart die einzelnen Lamellen 1 zusätzlich mit Rillen 7 versehen. Dabei sind die Rillen 7 in der Mitte senkrecht parallel und an den Seiten nahezu im 90°-Winkel zum auftreffenden, zu reflektierenden Licht angeordnet, wobei die Rillen 7 strahlenförmig von der Mitte auseinanderstreben. An den Seiten, am Rande, haben die Rillen 7 eine leicht bogenförmige Krümmung, die die gleichen Effekte hat, wie die bereits beschriebene Krümmung der Lamellen 1. Die Lichtstrahlen werden dadurch überall nahezu im gleichen Winkel reflektiert. In der Mitte des Lamellenreflektors können die vertikalen, parallel verlaufenden Rillen 7 auch weggelassen werden. Es tritt keine merkliche Verschlechterung der Lichtstreuung auf. Eine weitere Verbesserung der Lichtstreuung läßt sich erreichen, wenn die Rillen 7, die sich an den Seiten des Lamellenreflektors befinden, unterschiedlich lange Flanken haben, wobei die breitere Flanke jeweils der Lichtquelle zugewandt ist, so daß sie ebenfalls lamellenartig ausgebildet sind. Mit Hilfe dieser vorteilhaften Ausgestaltung lassen sich die Außenabmessungen des erfindungsgemäßen Lamellenreflektors weiter verkleinern, ohne seine Wirksamkeit zu verringern, weil dadurch die gesamte Fläche gleichmäßig zur Reflexion genutzt wird. Sie leuchtet gleichmäßig einen Bildwinkel aus, der dem eines Weitwinkelobjektives entspricht.

Sinnvoll ist die Beschichtung der Lamellen 1 mit Oberflächenfarben, die als Ergebnis ein warmfarbiges Aufhellicht erzeugen. Das bedeutet, daß möglichst die Lichtverhältnisse der Natur nachempfunden werden. Es ist auch von Vorteil, bei verschiedenen Lamellenreflektoren die Lamellen 1 mit unterschiedlichen Oberflächenfarben und Reflexionseigenschaften zu beschichten, um verschiedene Wirkungen zu erzielen. Wird noch weicheres Aufhellicht gebraucht, kann im Bedarfsfall an der Vorderseite des Blitzgerätes 6 ein Diffusor angeordnet werden.

In einer anderen Ausführungsart des erfindungsgemäßen Lamellenreflektors haben die Lamellen 1 unterschiedliche Winkel von 30° bis 45°, bezogen auf die Reflektorrückwand 4. Dabei sind die Lamellen 1, die unmittelbar an der Lichtaustrittsfläche 5 angeordnet sind, mit einem 45°-Winkel ausgebildet. Nach oben, zum oberen Rand der Reflexionsfläche des Lamellenreflektors hin, nimmt der Winkel stufenweise bis auf 30°, bezogen auf die Reflektorrückwand 4, ab. Mit Hilfe dieser Winkelverteilung der Lamellen 1 ist der Lamellenreflektor sowohl für das Blitzen im 60°-Winkel wie auch im 90°-Winkel, bezogen auf die optische Achse eines Fotoapparates, geeignet.

In einer speziellen Ausführungsform für die Erzielung spezieller Lichteffekte auf den Aufnahmen können die einzelnen Lamellen 1 mit unterschiedlich reflektierenden Oberflächen versehen sein. So kann zum Beispiel abwechselnd eine Lamelle 1 mit einer stark reflektierenden und die benachbarte mit einer weniger stark reflektierenden Oberflächenstruktur ausgebildet sein.

Der erfindungsgemäße Lamellenreflektor kann in einer weiteren Ausführungsform aus verschiedenfarbigen Material bestehen. Zum Beispiel kann das Reflexionsteil bereits aus Material bestehen, welches die Farb- und Reflexionseigenschaften besitzt, die die erfindungsgemäße Wirkung ermöglichen.

Das Material kann auch farblos sein und das Licht reflektierende und streuende Materialteilchen enthalten (z. B. kleine Aluminiumplättchen).

Auf der Reflektorrückwand 4 sind vorzugsweise im Bereich der Befestigungseinrichtung an das Blitzgerät 6 Markierungen zur genauen mittigen Positionierung des Lamellenreflektors für die Aufnahmen im Quer- oder Hochformat angeordnet.

### Liste der verwendeten Bezugszeichen

- 1: Lamelle
- 2: Lamellenvorderseite
- 3: Lamellenrückseite
- 4: Reflektorrückwand
- 5: Lichtaustrittsfläche
- 6: Blitzgerät
- 7: Rillen
- 8: Blitzröhre

## Patentansprüche

1. Reflektoreinrichtung für Blitzgeräte, Fotoleuchten und Videoleuchten, insbesondere für Elektronenblitzgeräte (6),bestehend aus einer mit ihrer Vorderseite zum beleuchteten Objekt hin gerichteten reflektierenden Scheibe mit einer am Randbereich angeordneten Haltevorrichtung zur Befestigung an den genannten Lichtquellen, **dadurch gekennzeichnet,**
**daß** die Scheibe hohlspiegelartig gekrümmt ist, daß die Scheibe auf der reflektierenden, zum zu beleuchtenden Objekt gerichteten Seite, schmale, in Scheibenmitte parallel zur Lichtaustrittsfläche (5) verlaufende, nach außen der Scheibenkrümmung folgende, schräg zur Lichtaustrittsfläche (5) hingerichtete, parallel liegende Lamellen (1) besitzt, die im Schnitt eine sägezahnartige Form aufweisen, wobei die Oberflächenstruktur der zur Lichtaustrittsfläche (5) hingerichteten Lamellenvorderseiten (2) mit einer reflektierenden und zugleich das Licht streuenden Schicht versehen sind und die von der Lichtaustrittsfläche (5) abgewandten Lamellenrückseiten (3) stark reflektierend sind.

2. Reflektoreinrichtung für Blitzgeräte, Fotoleuchten und Videoleuchten nach Anspruch 1,
**dadurch gekennzeichnet,**
**daß** die Lamellenvorderseiten (2) bezogen auf die Scheibenkrümmung der Reflektorrückwand (4) einen Winkel von 30 oder 45 Grad bzw. 30 bis 45 Grad bilden.

3. Reflektoreinrichtung für Blitzgeräte, Fotoleuchten und Videoleuchten nach Anspruch 1,
**dadurch gekennzeichnet,**
**daß** in den Lamellen (1) Rillen (7) angeordnet sind, wobei die Rillen (7) in der Reflektormitte senkrecht parallel und an den Seiten nahezu im 90°-Winkel zum auftreffenden und zu reflektierenden Licht eingebracht sind und die Rillen (7) strahlenförmig von der Mitte auseinanderstreben.

4. Reflektoreinrichtung für Blitzgeräte, Fotoleuchten und Videoleuchten nach Anspruch 1,
**dadurch gekennzeichnet,**
**daß** die Lamellen (1) in den Eckbereichen der Reflektoreinrichtung nach unten, zur Lichtaustrittsfläche (5) hin gekrümmt, konzentrisch angeordnet sind.

5. Reflektoreinrichtung für Blitzgeräte, Fotoleuchten und Videoleuchten nach Anspruch 1,
**dadurch gekennzeichnet,**
**daß** die Reflektoreinrichtung eine rechteckige, quadratische oder trapezförmige Außenkontur besitzt.

6. Reflektoreinrichtung für Blitzgeräte, Fotoleuchten und Videoleuchten nach Anspruch 1,
**dadurch gekennzeichnet,**
**daß** die Oberflächenstruktur feinkörnig ausgebildet ist.

7. Reflektoreinrichtung für Blitzgeräte, Fotoleuchten und Videoleuchten nach Anspruch 1,
**dadurch gekennzeichnet,**
**daß** die Lamellen (1) mit unterschiedlichen Oberflächenfarben beschichtet sind.

8. Reflektoreinrichtung für Blitzgeräte, Fotoleuchten und Videoleuchten nach Anspruch 1,
**dadurch gekennzeichnet,**
**daß** die Reflektoreinrichtung aus verschiedenfarbigen Materialien besteht.

9. Reflektoreinrichtung für Blitzgeräte, Fotoleuchten und Videoleuchten nach Anspruch 1,
**dadurch gekennzeichnet,**
**daß** das Material der Reflexionsfläche farblos ist und bei matter Oberfläche zahlreiche das Licht streuend reflektierende Materialteilchen enthält.

10. Reflektoreinrichtung für Blitzgeräte, Fotoleuchten und Videoleuchten nach Anspruch 1,
**dadurch gekennzeichnet,**
**daß** auf den Lamellen (1) unterschiedlich reflektierende Oberflächen angeordnet sind.

## Claims

1. Reflector appliance for flashguns, photo and video lamps, especially for electronic flashguns (6), consisting of a reflecting disk, with its front directed to the lighted object, with a holder for fixing it on the mentioned luminous sources, arranged on the marginal area, marked by the fact
that the disk is concavely curved; that the disk on its reflecting side that is directed to the lighted object has narrow, parallel plates (1) that in the mid of the disk run in parallel to the light delivery area (5), to the exterior following the curve of the disk, directed in a slanting way to the light delivery area (5), with these plates having in their cut a saw tooth form, with the surface structure of the front sides of the plates (2) directed to the light delivery area (5), equipped with a reflecting and at the same time light-scattering coat, and that the reverse sides of the plates (3) that are opposite to the light delivery area (5) are strongly reflecting.

2. Reflector appliance for flashguns, photo and video lamps in accordance with Claim 1, marked by the fact
that the front sides of the plates (2), related to the disk curve of the back wall of the reflector (4), form an angle of 30 or 45 degrees or 30 to 45 degrees respectively.

3. Reflector appliance for flashguns, photo and video lamps in accordance with Claim 1, marked by the fact
that groves (7) are arranged within the plates (1), with the groves (7) being included in the mid of the reflector vertically in parallel and on the sides nearly in a 90° angle to the impinging light to be reflected, and with the groves (7) radiating from the mid.

4. Reflector appliance for flashguns, photo and video lamps in accordance with Claim 1, marked by the fact
that the plates (1) in the comer areas of the reflector appliance are arranged downwards, curvedly in the direction of the light delivery area (5), and concentrically.

5. Reflector appliance for flashguns, photo and video lamps in accordance with Claim 1, marked by the fact
that the reflector appliance has a rectangular, squared, or trapezoid outside contour.

6. Reflector appliance for flashguns, photo and video lamps in accordance with Claim 1, marked by the fact
that the surface structure is developed in a finely grained way.

7. Reflector appliance for flashguns, photo and video lamps in accordance with Claim 1, marked by the fact
that the plates (1) are coated with differing surface colouring substances.

8. Reflector appliance for flashguns, photo and video lamps in accordance with Claim 1, marked by the fact
that the reflector appliance consists of materials that differ in colour.

9. Reflector appliance for flashguns, photo and video lamps in accordance with Claim 1. marked by the fact
that the material of the reflective area is transparent and includes numerous, light-scattering and reflecting material particles at a flat surface.

10. Reflector appliance for flashguns, photo and video lamps in accordance with Claim 1, marked by the fact
that on the plates (1) there are differently reflecting surfaces.

## Revendications

1. Le dispositif réflecteur pour appareils à production de lumière-éclair, pour lampes photo et lampes vidéo, notamment pour flashes électroniques (6), comprenant un disque réflecteur dont la face est orientée vers l'objet à éclairer, et un dispositif de serrage monté sur le bord du disque pour permettre la fixation du dispositif réflecteur sur les sources lumineuses précitées, est **caractérisé en ce que**
le disque a une forme concave, que le disque est doté, sur le côté réflecteur regardant vers l'objet à éclairer, d'étroites lamelles (1) qui, au centre du disque, sont disposées en parallèle par rapport à la face réfléchissante (5) et vers le bord extérieur du disque, en biais par rapport à la face réfléchissante (5) et décrivant la même courbe que le disque, que la coupe des lamelles présente une forme en dents de scie, que la structure surfacique des faces des lamelles (2) orientées vers la surface réfléchissante (5) étant couverte d'un film à la fois réflecteur et diffuseur, et que le verso (3) des lamelles orientées dans les sens opposé de la surface réfléchissante(5) se distingue par une forte capacité de réflexion des rayons lumineux.

2. Le dispositif réflecteur pour appareils à production de lumière-éclair, pour lampes photo et lampes vidéo suivant la revendication 1 est **caractérisé en ce que**
par rapport à la courbe du disque du dos du dispositif réflecteur (4) les faces avant (2) des lamelles forment un angle de 30 ou 45 degrés ou/et de 30 à 45 degrés.

3. Le dispositif réflecteur pour appareils à production de lumière-éclair, pour lampes photo et lampes vidéo suivant la revendication 1 est **caractérisé en ce que**
les lamelles (1) sont pourvues de rainures (7) disposées dans la zone médiane de manière perpendiculaire et en parallèle les unes par rapport aux autres et vers les côtés de sorte qu'elles forment un angle de près de 90 degrés par rapport aux rayons lumineux incidents et reflétés, les rainures étant disposées en faisceau depuis le centre.

4. Le dispositif réflecteur pour appareils à production de lumière-éclair, pour lampes photo et lampes vidéo suivant la revendication 1 est **caractérisé en ce que**
dans les zones angulaires du dispositif réflecteur les lamelles (1) sont disposées de manière concentriques en suivant une courbe vers le bas en direction de la surface réfléchissante (5).

5. Le dispositif réflecteur pour appareils à production de lumière-éclair, pour lampes photo et lampes vidéo suivant la revendication 1 est **caractérisé en ce que**
le contour extérieur du dispositif réflecteur peut prendre une forme rectangulaire, carrée ou trapézoïdale.

6. Le dispositif réflecteur pour appareils à production de lumière-éclair, pour lampes photo et lampes vidéo suivant la revendication 1 est **caractérisé en ce que**
la surface revêt une structure à grains fins.

7. Le dispositif réflecteur pour appareils à production de lumière-éclair, pour lampes photo et lampes vidéo suivant la revendication 1 est **caractérisé en ce que**
les lamelles (1) peuvent être enduites de différentes peintures surfaciques.

8. Le dispositif réflecteur pour appareils à production de lumière-éclair, pour lampes photo et lampes vidéo suivant la revendication 1 est **caractérisé en ce que**
le dispositif réflecteur se compose de matériaux de couleurs différentes.

9. Le dispositif réflecteur pour appareils à production de lumière-éclair, pour lampes photo et lampes vidéo suivant la revendication 1 est **caractérisé en ce que**
le matériau de la surface réfléchissante est incolore, la surface mate se compose de nombreuses particules reflétant la lumière de manière diffuse.

10. Le dispositif réflecteur pour appareils à production de lumière-éclair, pour lampes photo et lampes vidéo suivant la revendication 1 est **caractérisé en ce que**
les surfaces lamelles (1) sont dotées de couches de réflexion variable.
